(19) Europäisches Patentamt
European Patent Office
Office européen des brevets

(11) EP 1 771 513 B1

(12) **EUROPÄISCHE PATENTSCHRIFT**

(45) Veröffentlichungstag und Bekanntmachung des Hinweises auf die Patenterteilung:
**18.06.2008 Patentblatt 2008/25**

(21) Anmeldenummer: **05774991.3**

(22) Anmeldetag: **19.07.2005**

(51) Int Cl.:
***C08L 67/00*** *(2006.01)* ***C08L 69/00*** *(2006.01)*

(86) Internationale Anmeldenummer:
**PCT/EP2005/007838**

(87) Internationale Veröffentlichungsnummer:
**WO 2006/008130 (26.01.2006 Gazette 2006/04)**

(54) **KONTINUIERLICHES VERFAHREN ZUR HERSTELLUNG VON POLYALKYLENARYLATEN MIT HYPERVERZWEIGTEN POLYESTERN UND/ODER POLYCARBONATEN**

CONTINUOUS METHOD FOR PRODUCING POLYALKYLENE ARYLATES CONTAINING HYPERBRANCHED POLYESTERS AND/OR POLYCARBONATES

PRODUCTION EN CONTINU DE POLYALKYLENE ARYLATES AU MOYEN DE POLYESTERS HYPER RAMIFIES ET/OU DE POLYCARBONATES HYPER RAMIFIES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.07.2004 DE 102004035357**

(43) Veröffentlichungstag der Anmeldung:
**11.04.2007 Patentblatt 2007/15**

(73) Patentinhaber: **BASF SE**
**67056 Ludwigshafen (DE)**

(72) Erfinder:
- **EIPPER, Andreas**
  **67067 Ludwigshafen (DE)**
- **BRUCHMANN, Bernd**
  **67251 Freinsheim (DE)**
- **WEISS, Carsten**
  **67063 Ludwigshafen (DE)**
- **STUMBE, Jean-Francois**
  **F-67200 Strasbourg (FR)**
- **GEPRÄGS, Michael**
  **01987 Schwarzheide (DE)**

(56) Entgegenhaltungen:
**EP-A- 1 424 360**
**WO-A-03/004546**
**WO-A-03/093343**
**WO-A-20/05075563**
**WO-A-20/05075565**
**DE-A1- 10 240 817**
**FR-A- 2 833 604**
**US-A1- 2002 111 406**
**US-B1- 6 528 612**

- **JANG J ET AL: "CRYSTALLIZATION BEHAVIOR OF POLY(ETHYLENE TEREPHTHALATE) BLENDED WITH HYPERBRANCHED POLYMERS: THE EFFECT OF TERMINAL GROUPS AND COMPOSITION OF HYPERBRANCHED POLYMERS" MACROMOLECULES, AMERICAN CHEMICAL SOCIETY, EASTON, PA, US, Bd. 33, Nr. 33, 2000, Seiten 1864-1870, XP001079109 ISSN: 0024-9297**
- **LIN Q ET AL: "Polymerization of A2 with B3 Monomers: A Facile Approach to Hyperbranched Poly(aryl ester)s" MACROMOLECULES, ACS, WASHINGTON, DC, US, Bd. 36, 2003, Seiten 9809-9816, XP002327734 ISSN: 0024-9297**
- **LUMANN N R ET AL: "The convergent synthesis of Poly(glycerol-succininc acid) Dendritic Macromolecules" CHEMISTRY - A EUROPEAN JOURNAL, VCH PUBLISHERS, US, Bd. 9, 2003, Seiten 5618-5626, XP002327733 ISSN: 0947-6539**
- **CARR P L ET AL: "Dielectric and mechanical characterization of aryl ester dendrimer/PET blends" POLYMER, ELSEVIER SCIENCE PUBLISHERS B.V, GB, Bd. 37, Nr. 12, 1996, Seiten 2395-2401, XP004069150 ISSN: 0032-3861**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein verbessertes Verfahren zur kontinuierlichen Herstellung von hyperverzweigten Polyester und/oder Polycarbonaten enthaltenden Polyalkylenarylaten.

Polyalkylenarylate zeichnen sich durch geringe Wasseraufnahme und gute Dimensionsstabilität sowie Beständigkeit gegenüber Lösungsmitteln aus.

Eine nachteilige Eigenschaft ist die unzureichende Fließfähigkeit und eine geringe Kristallisationsgeschwindigkeit, welche Probleme bei der Verarbeitung von hochmolekularen oder sehr dünnwandigen Spritzgussteilen bereitet.

Durch Zugabe eines hyperverzweigten Polyesters und/oder Polycarbonates - gegebenenfalls in Kombination mit anderen Additiven - kann die Fließfähigkeit bereits verbessert werden, wie beispielsweise in den DE-A 10200400562.8 und DE-A 102004005657.9 vorgeschlagen wurde.

Polyester mit Additiven werden nach dem Stand der Technik durch Einmischen der Additive z.B. auf dem Extruder hergestellt. Der zusätzliche Verfahrensschritt ist kostenintensiv und verursacht darüber hinaus eine thermische Schädigung des Polymers. Hinsichtlich der mechanischen Eigenschaften, insbesondere der Zähigkeit und der Bruchdehnung sind die bekannten Formmassen verbesserungswürdig. Insbesondere ist die Fließfähigkeit unter weitestgehender Erhaltung der mechanischen Eigenschaften verbesserungswürdig.

Aufgabe der vorliegenden Erfindung war es daher, ein verbessertes kontinuierliches Verfahren zur Herstellung von hyperverzweigten oder hochverzweigten Polymeren B) und gegebenenfalls Schmiermittel C) enthaltenden Polyalkylenarylate A) zur Verfügung zu stellen, welches wirtschaftlicher und weitestgehend ohne thermische Schädigung des Polymeren zu Polyestern mit verbesserten Eigenschaften führt. Insbesondere sollen die mechanischen Eigenschaften wie multiaxiale Zähigkeit und die Vergilbungsneigung verbessert werden, wobei eine bessere Verarbeitung durch schnelle Kristallisation gewährleistet sein soll.

Insbesondere die Fließfähigkeit soll signifikant verbessert werden, wobei die mechanischen Eigenschaften erhalten bleiben sollen.

Überraschenderweise wurde gefunden, dass diese Aufgabe dadurch gelöst werden kann, indem man eine aromatische Dicarbonsäure oder deren Ester bzw. esterbildende Derivate mit einem molaren Überschuss einer aliphatischen Dihydroxyverbindung verestert bzw. umestert und das erhaltene Umesterungs- bzw. Veresterungsprodukt polykondensiert, dadurch gekennzeichnet, dass man bei Erreichen von mindestens 80 % der gewünschten Viskositätszahl Komponente B) sowie gegebenenfalls Komponente C) der Polymerschmelze zugibt und die Schmelze gegebenenfalls nachkondensiert und anschließend austrägt, abkühlt und granuliert sowie als Komponente B) mindestens ein hoch- oder hyperverzweigtes Polycarbonat B1) mit einer OH-Zahl von 1 bis 600 mg KOH/g Polycarbonat (gemäß DIN 53240, Teil 2) oder mindestens einen hoch- oder hyperverzweigten Polyester B2) des Typs $A_xB_y$ mit x mindestens 1,1 und y mindestens 2,1 oder deren Mischungen einsetzt.

Bevorzugte Ausführungsformen sind den Unteransprüchen zu entnehmen.

Als Komponente A) enthalten die erfindungsgemäß erhältlichen Formmassen 10 bis 99,9, vorzugsweise 50 bis 99,5 und insbesondere 50 bis 99,3 Gew.-% eines thermoplastischen Polyalkylenarylates.

Derartige Polyalkylenarylate sind erhältlich, indem man eine aromatische Dicarbonsäure oder deren Ester bzw. esterbildende Derivate mit einem molaren Überschuss, einer aliphatischen Dihydroxyverbindung verestert bzw. umestert und das erhaltene Umesterungs- bzw. Veresterungsprodukt in bekannter Weise polykondensiert.

Als bevorzugte Dicarbonsäuren sind 2,6-Naphthalindicarbonsäure und Terephthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 2-Methyl-1,5-Pentandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 10, vorzugsweise 2 bis 6 C-Atomen ableiten, zu nennen. Von diesen werden insbesondere Polyethylenterephthalat und Polybutylenterephthalat oder deren Mischungen bevorzugt.

Weiterhin bevorzugt sind Polyethylenterephthalate und Polybutylenterephthalate, welche bis zu 1 Gew.-%, bezogen auf A), vorzugsweise bis zu 0,75 Gew.-% 1,6-Hexandiol und/oder 5-Methyl-1,5-Pentandiol als weitere Monomereinheiten enthalten.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C1-C4-Alkylgruppen wie Methyl-, Ethyl-, i- bzw. n-Propyl- und n-, i- bzw. t-Butylgruppen.

Insbesondere bevorzugt sind Polyester, deren Carboxylendgruppengehalt bis zu 50 meq/kg, bevorzugt bis zu 30 meq/kg und insbesondere bis zu 27 meq/kg Polyester beträgt. Derartige Polyester können beispielsweise in Anlehnung

an das Verfahren der DE-A 44 01 055 hergestellt werden. Der Carboxylendgruppengehalt wird üblicherweise durch Titrationsverfahren (z.B. Potentiometrie) bestimmt.

Die bevorzugte Herstellung erfolgt in Anlehnung an die DE-A 44 01 055 kontinuierlich, indem man

a) in einer ersten Stufe eine aromatische Dicarbonsäure oder deren Ester bzw. esterbildende Derivate mit einem molaren Überschuss einer Dihydroxyverbindung verestert bzw. umestert,

b) in einer zweiten Stufe das gemäß a) erhaltene Umesterungs- bzw. Veresterungsprodukt vorkondensiert und

c) in einer dritten Stufe das aus b) erhältliche Produkt auf die gewünschte Viskositätszahl polykondensiert, wobei man die Stufe a) und die Stufe b) des Verfahrens in mindestens zwei Temperaturzonen durchführt.

Die Stufe a) des Verfahrens wird als sogenannte Umesterungs- bzw. Veresterungsreaktion bezeichnet. Diese wird in mindestens zwei, vorzugsweise mindestens drei Temperaturzonen durchgeführt. Die Temperatur der folgenden Zone sollte hierbei 1-40, vorzugsweise 2-30 und insbesondere 5-10°C höher als die Temperatur der vorherigen Zone sein. Der Temperaturbereich für die gesamte Veresterungsreaktion liegt im allgemeinen (je nach Einsatzstoff) bei 160 bis 240, vorzugsweise 165 bis 250 und insbesondere bei 180 bis 240°C, der Druck beträgt im allgemeinen von 1 bis 10, vorzugsweise von 1 bis 4 und insbesondere von 1 bis 2 bar.

Vorzugsweise führt man die Stufe a) des Verfahrens so aus, dass man in mindestens zwei Temperaturzonen bei weitestgehend gleichen Druckverhältnissen in den einzelnen Zonen arbeitet. Die technischen Voraussetzungen wie Apparaturen (z.B. in Form von Kesselkaskaden) zur Schaffung von unterschiedlichen Temperaturzonen sind dem Fachmann bekannt, weshalb sich weitere Einzelheiten hierzu erübrigen.

Die Einsatzstoffe wie Diole und Säuren wurden bereits vorstehend (Komponente A) beschrieben.

Für die Umsetzung wird üblicherweise ein molarer Überschuss von Diol eingesetzt, um das Estergleichgewicht in der gewünschten Form zu beeinflussen. Die Molverhältnisse Dicarbonsäure bzw. Dicarbonsäureester : Diol betragen üblicherweise 1:1,1 bis 1:3,5 vorzugsweise 1:1,2 bis 1:2,2. Ganz besonders bevorzugt sind Molverhältnisse Dicarbonsäure:Diol von 1:1,5 bis 1:2, sowie Diester:Diol von 1:1,2 bis 1,5.

Es ist jedoch auch möglich mit einem geringeren Überschuss an Diol in der ersten Zone die Esterreaktion durchzuführen und entsprechend in den weiteren Temperaturzonen weitere Mengen Diol zuzugeben. In der bevorzugten Ausführungsform des erfindungsgemäßen Verfahrens mit drei Temperaturzonen wird das gesamte Diol in 3 Zonen prozentual wie folgt aufgeteilt: 60 bis 85 (1), 10 bis 25 (2) und 5-15 (3), vorzugsweise: 70 bis 80 (1), 10 bis 20 (2), 5 bis 10 (3).

Die Verweilzeiten betragen für die gesamte Stufe a) 140 bis 300, vorzugsweise von 150 bis 260 und insbesondere von 160 bis 220 Min., die Verweilzeit für die erste Zone beträgt von 100 bis 190, vorzugsweise von 110 bis 150; für die zweite Zone von 65 bis 140, vorzugsweise von 65 bis 110 Min. Für die bevorzugte Ausführungsform mit 3 Zonen beträgt die Verweilzeit in der 3. Zone 15 bis 45, vorzugsweise 15 bis 30 Min, wobei sich die Verweilzeiten in der 2. Zone entsprechend verringern und in der 1. Zone wie oben ausgeführt beibehalten werden.

In der bevorzugten Ausführungsform des erfindungsgemäßen Verfahrens nehmen die Verweilzeiten von der ersten Zone zur dritten Zone im Verhältnis vorzugsweise 6:3:1 ab.

Vor der Stufe a) des Verfahrens wird in einer besonders bevorzugten Ausführungsform zur Dihydroxyverbindung zunächst ein Katalysator und anschließend eine (Erd)alkalimetallverbindung zugesetzt.

Bevorzugte Katalysatoren sind Titanverbindungen und Zinnverbindungen wie sie u.a. aus den US 39 36 421, US 43 29 444 Patentschriften bekannt sind. Als bevorzugte Verbindungen seien Tetrabutylorthotitanat und Triisopropyltitanat sowie Zinn-di-octoat genannt, welche üblicherweise in der Stufe a) in Mengen von 20 bis 150, vorzugsweise von 20 bis 120 und insbesondere von 30 bis 70 ppm (bezogen auf das Metall) eingesetzt werden.

Zur weiteren Reduzierung des Carboxylendgruppengehaltes des Polyesters kann es vorteilhaft sein, vor der Umsetzung der Ausgangsmonomeren 0,1 bis 10 mmol, vorzugsweise 0,2 bis 0,65 mmol, pro kg Polyester, einer Alkalimetallverbindung oder Erdalkalimetallverbindung (berechnet als Alkalimetall bzw. Erdalkalimetall) zuzugeben. Derartige Verbindungen werden in der DE-A 43 33 930 vorgeschlagen. Als bevorzugte Verbindungen seien Natriumcarbonat, Natriumacetat, und Natriumalkoholate, insbesondere Natriummethanolat genannt.

Die Umesterungs- bzw. Veresterungsprodukte werden anschließend in die Vorkondensationsstufe b) kontinuierlich überführt.

Diese weist mindestens zwei, vorzugsweise mindestens drei und insbesondere mindestens vier Temperaturzonen auf. Die Temperatur der folgenden Zone liegt hierbei 1 bis 40, vorzugsweise 2- 30 und insbesondere 5-20°C höher als die Temperatur der vorherigen Zone. Der Temperaturbereich für die gesamte Vorkondensation liegt im allgemeinen (je nach Einsatzstoffen ) bei 220 bis 300, vorzugsweise bei 225 bis 290 und insbesondere bei 240 bis 290°C.

Bevorzugt erfolgt die Vorkondensation in der Weise, dass in der ersten Zone der Druck 0,5 bis 1 bar, vorzugsweise 0,6 bis 0,8 bar beträgt und in der zweiten bzw. letzten Zone 20 bis 200, vorzugsweise 25 bis 150 mbar und insbesondere 50 bis 150 mbar beträgt. Technisch kann hierfür z.B. ein senkrecht stehender Rohrbündelreaktor verwendet

werden, andere Reaktoren zur Durchführung sind dem Fachmann bekannt.

Die Verweilzeiten betragen für die gesamte Stufe b) des Verfahrens von 10 bis 80, vorzugsweise von 15 bis 50 und insbesondere von 20 bis 40 Min.

In einer besonders bevorzugten Ausführungsform des erfindungsgemäßen Verfahrens werden vier Temperaturzonen verwendet, wobei von Zonen zu Zone die Temperatur in den oben beschriebenen Verhältnissen steigt und der Druck von der ersten bis zur vierten Zone innerhalb der beschriebenen Grenzen reduziert wird. Die vierte Zone besteht bei dieser bevorzugten Ausführungsform des Rohrbündelwärmetauschers aus einer Vorrichtung zur Trennung von Dampf- und Flüssigphase (auch als Brüdentrenngefäße bezeichnet), wobei das Verhältnis des Volumens des Trenngefäßes zum Volumen in den Rohren vorzugsweise 5 bis 15: I, insbesondere 8 bis 13: 1 beträgt.

Die Volumenverhältnisse der ersten drei Zonen sind in dieser besonders bevorzugten Ausführungsform so gestaltet, dass die erste Zone von 30 bis 60, vorzugsweise 50 %, die zweite Zone von 20 bis 40, vorzugsweise 30 % und die dritte Zone von 10 bis 30, vorzugsweise 20 % anteilig an Volumen( Volumenverhältnisse) ausmachen. Nachstehend sind die Temperaturbereiche , Druckbereiche und Verweilzeiten für die besonders bevorzugte Ausführungsform des erfindungsgemäßen Verfahrens aufgeführt:

1. Zone: Temperatur von 230 bis 270, vorzugsweise von 240 bis 250°C, Druck von 0,6 bis 0,9, vorzugsweise von 0,7 bis 0,9 bar.

   Verweilzeit von 10 bis 30, vorzugsweise von 15 bis 25 Min.

2. Zone: Temperatur von 240 bis 280, vorzugsweise von 250 bis 270°C, Druck von 0,2 bis 0,6, vorzugsweise von 0,3 bis 0,5 bar.

   Verweilzeit von 5 bis 25, vorzugsweise von 7 bis 15 Min.

3. Zone: Temperatur von 245 bis 290 vorzugsweise von 250 bis 280°C, Druck von 0,1 bis 0,3, vorzugsweise von 0,1 bis 0,25 bar.

   Verweilzeit von 5 bis 10, vorzugsweise von 4 bis 8 Min.

4. Zone: Temperatur von 250 bis 300 vorzugsweise von 252 bis 285°C, Druck von 0,015 bis 0,2, vorzugsweise von 0,025 bis 0,15 bar.

   Verweilzeit von 10 bis 30, vorzugsweise von 14 bis 24 Min.

Die vorstehend bei Stufe a) des Verfahrens genannten Katalysatoren und weitere Zusatzstoffe können in den genannten Mengen in die Stufe b) des Verfahrens zudosiert werden.

Nach der Stufe b) des erfindungsgemäßen Verfahrens weist das Polyesterpräpolymer eine Viskositätszahl von 15 bis 50, vorzugsweise von 20 bis 30 ml/g auf, gemessen als 0,5 Gew.-% Lösung in Phenol/o-Dichlorbenzol (1:1) gemäß DIN 53728, Teil 3 (1985) bei 25°C.

Das Polyesterpräpolymer wird anschließend in die Stufe c) des erfindungsgemäßen Verfahrens überführt. Diese wird vorzugsweise einstufig durchgeführt bei Temperaturen von 240 bis 290, vorzugsweise von 240 bis 270 und insbesondere 240 bis 265°C. Der Druck beträgt von 0,3 bis 10, vorzugsweise 0,3 bis 5 und insbesondere 0,3 bis 2 mbar.

Die Verweilzeiten betragen üblicherweise 30 bis 180, vorzugsweise von 35 bis 150 Min.

Während der Polykondensation kann man vorzugsweise eine Oberflächenemeuerung des Produktes vornehmen. Oberflächenerneuerung bedeutet, dass ständig neues Polymeres an die Oberfläche der Schmelze gelangt, so dass der Austritt des Diols erleichtert wird.

Diese beträgt vorzugsweise 1 bis 20 und insbesondere 1,5 bis 6 m2/kg Produkt und Minute.

Es kann weiterhin von Vorteil sein, auch in dieser Stufe des Verfahrens Katalysatoren und andere Zusatzstoffe zuzugeben, wie sie vorstehend beschrieben wurden.

Nach der kontinuierlichen Polykondensation weist der Polyester eine Viskositätszahl von 60 bis 180, vorzugsweise von 90 bis 160 ml/g auf, bestimmt in einer 0,5 gew.-%igen Lösung in einem Phenol/o-Dichlorbenzolgemisch (Gew.-Verh. 1:1 bei 25°C) gemäß DIN 53728, 3. Teil (1985).

Wesentlich beim erfindungsgemäßen Verfahren ist, dass man bei Erreichen von mindestens 80 %, vorzugsweise mindestens 95 % und insbesondere 100 % der gewünschten Endviskositätszahl des Polyesters mindestens ein hoch- oder hyperverzweigtes Polycarbonat B) mit einer OH-Zahl von 1 bis 600 mg KOH/g Polycarbonat (gemäß DIN

53 240, Teil 2) und gegebenenfalls Schmiermittels C) der Polymerschmelze gemeinsam zugibt, die Schmelze gegebenenfalls nachkondensiert und anschließend austrägt, abkühlt und granuliert. Vorzugsweise erfolgt die Zugabe des Schmiermittels C) in einer Menge von 0,01 bis 3, vorzugsweise 0,1 bis 1 und insbesondere 0,2 bis 0,8 Gew.-%, bezogen auf 100 Gew.-% der Komponenten A) bis C).

Insbesondere bevorzugt erfolgt die Zugabe in Form einer Suspension, wobei man die Komponente B vor der Zugabe zur Schmelze gegebenenfalls bei erhöhter Temperatur im Schmiermittel suspendiert. Je nach Art des eingesetzten Schmiermittels kann es zur Herstellung einer Suspension erforderlich sein, die Mischung aus Schmiermittel und Nukleierungsmittel vorab auf Temperaturen von 30 bis 150, vorzugsweise von 60 bis 130°C zu erhitzen und anschließend zur Polymerschmelze zuzugeben.

Als Beispiel hierfür seien niedermolekulare Polyethylenwachse genannt, welche bekanntlich bei Raumtemperatur in fester Form vorliegen und zur Herstellung einer Suspension mit dem Nukleierungsmittel erhitzt werden müssen.

Die Zugabe der Komponenten B) und gegebenenfalls C) erfolgt vorzugsweise während der Polykondensation bei Erreichen von mindestens 80 % der gewünschten Endviskositätszahl. Geeignete Polykondensationsvorrichtungen sind dem Fachmann bekannt, weshalb sich weitere Einzelheiten hierzu erübrigen. In einer besonders bevorzugten Ausführungsform des erfindungsgemäßen Verfahrens kann man die Schmelze aus dem Polykondensationsreaktor austragen, über geeignete Vorrichtungen, z.B. Dosierpumpe mit Heizung, die Mischung aus B) und C) zugeben und die Polymerschmelze anschließend in z.B. ein Sulzerrohr überführen und auf die gewünschte Endviskositätszahl kondensieren, wobei eine Homogenisierung der Schmelze erfolgt, und anschließend austragen, kühlen und granulieren.

Als Komponente B) enthalten die erfindungsgemäß erhältlichen Formmassen 0,01 bis 50, vorzugsweise 0,5 bis 20 und insbesondere 0,7 bis 10 Gew.-% mindestens eines hoch- oder hyperverzweigten Polycarbonates B1), mit einer OH-Zahl von 1 bis 600, vorzugsweise 10 bis 550 und insbesondere von 50 bis 550 mgKOH/g Polycarbonat (gemäß DIN 53240, Teil 2) oder mindestens eines Polyesters B2) oder deren Mischungen, wie nachstehend erläutert.

Unter hyperverzweigten Polycarbonaten B1) werden im Rahmen dieser Erfindung unvernetzte Makromoleküle mit Hydroxyl- und Carbonatgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30 und ist definiert als

$$DB = \frac{T+Z}{T+Z+L} \times 100\%,$$

(wobei T die mittlere Anzahl der terminalen Monomereinheiten, Z die mittlere Anzahl der verzweigten Monomereinheiten und L die mittlere Anzahl der linearen Monomereinheiten in den Makromolekülen der jeweiligen Stoffe bedeuten).

Vorzugsweise weist die Komponente B1) ein Zahlenmittel des Molekulargewichtes $M_n$ von 100 bis 15000, vorzugsweise von 200 bis 12000 und insbesondere von 500 bis 10000 g/mol (GPC, Standard PMMA).

Die Glasübergangstemperatur Tg beträgt insbesondere von -80°C bis +140, vorzugsweise von -60 bis 120°C (gemäß DSC, DIN 53765).

Insbesondere beträgt die Viskosität (mPas) bei 23°C (gemäß DIN 53019) von 50 bis 200000, insbesondere von 100 bis 150000 und ganz besonders bevorzugt von 200 bis 100000.

Die Komponente B1) ist vorzugsweise erhältlich durch ein Verfahren, welches mindestens die folgenden Schritte umfasst:

a) Umsetzung mindestens eines organischen Carbonats (A) der allgemeinen Formel $RO[(CO)]_nOR$ mit mindestens einem aliphatischen, aliphatisch/aromatisch oder aromatischen Alkohol (B), welcher mindestens 3 OH-Gruppen aufweist, unter Eliminierung von Alkoholen ROH zu einem oder mehreren Kondensationsprodukten (K), wobei es sich bei R jeweils unabhängig voreinander um einen geradkettigen oder verzweigten aliphatischen, aromatisch/aliphatisch oder aromatischen Kohlenwasserstoffrest mit 1 bis 20 C-Atomen handelt, und wobei die Reste R auch unter Bildung eines Ringes miteinander verbunden sein können und n eine ganze Zahl zwischen 1 und 5 darstellt, oder

ab) Umsetzung von Phosgen, Diphosgen oder Triphosgen mit o.g. Alkohol (B) unter Chlorwasserstoffeliminierung sowie

b) intermolekulare Umsetzung der Kondensationsprodukte (K) zu einem hochfunktionellen, hoch- oder hyperverzweigten Polycarbonat,

wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Als Ausgangsmaterial kann Phosgen, Diphosgen oder Triphosgen eingesetzt werden, wobei organische Carbonate bevorzugt sind.

Bei den Resten R der als Ausgangsmaterial eingesetzten organischen Carbonate (A) der allgemeinen Formel $RO(CO)_nOR$ handelt es sich jeweils unabhängig voneinander um einen geradkettigen oder verzweigten aliphatischen, aromatisch/aliphatisch oder aromatischen Kohlenwasserstoffrest mit 1 bis 20 C-Atomen handelt. Die beiden Reste R können auch unter Bildung eines Ringes miteinander verbunden sein. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

Insbesondere werden einfache Carbonate der Formel $RO(CO)_nOR$ eingesetzt; n beträgt vorzugsweise 1 bis 3, insbesondere 1.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder $NO_x$ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat oder Didodecylcarbonat.

Beispiele für Carbonate, bei denen n größer 1 ist, umfassen Dialkyldicarbonate, wie Di(-t-butyl)dicarbonat oder Dialkyltricarbonate wie Di(-t-butyltricarbonat).

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Dipropylcarbonat, Dibutylcarbonat oder Diisobutylcarbonat.

Die organischen Carbonate werden mit mindestens einem aliphatischen Alkohol (B), welcher mindestens 3 OH-Gruppen aufweist oder Gemischen zweier oder mehrerer verschiedener Alkohole umgesetzt.

Beispiele für Verbindungen mit mindestens drei OH-Gruppen umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl) amin, Pentaerythrit, Diglycerin, Triglycerin, Polyglycerine, Bis(tri-methylolpropan), Tris(hydroxymethyl)isocyanurat, Tris (hydroxyethyl)isocyanurat, Phloroglucinol" Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Bis(tri-methylolpropan) oder Zucker, wie zum Beispiel Glucose, tri- oder höherfunktionelle Polyetherole auf Basis tri- oder höherfunktioneller Alkohole und Ethylenoxid, Propylenoxid oder Butylenoxid, oder Polyesterole. Dabei sind Glycerin, Trimethylolethan, Trimethylolpropan, 1,2,4-Butantriol, Pentaerythrit, sowie deren Polyetherole auf Basis von Ethylenoxid oder Propylenoxid besonders bevorzugt.

Diese mehrfunktionellen Alkohole können auch in Mischung mit difunktionellen Alkoholen (B') eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2- und 1,3-Propandiol, Dipropylenglykol, Tripropylenglykol, Neopentylglykol, 1,2-, 1,3- und 1,4-Butandiol, 1,2-, 1,3- und 1,5-Pentandiol, Hexandiol, Cyclopentandiol, Cyclohexandiol, Cyclohexandimethanol, Bis(4-Hydroxycyclohexyl)methan, Bis(4-Hydroxycyclohexyl)ethan, 2,2-Bis(4-Hydroxycyclohexyl)propan, 1,1'-Bis(4-Hydroxyphenyl)-3,3-5-trimethylcyclohexan, Resorcin, Hydrochinon, 4,4'-Dihydroxyphenyl, Bis-(4-Bis(hydroxyphenyl)sulfid, Bis(4-Hydroxyphenyl)sulfon, Bis(hydroxymethyl)benzol, Bis(hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen B') zu den mindestens trifunktionellen Alkoholen (B) vom Fachmann je nach den gewünschten Eigenschaften des Polycarbonates festgelegt. Im Regelfalle beträgt die Menge des oder der Alkohole (B') 0 bis 50 mol-% bezüglich der Gesamtmenge aller Alkohole (B) und (B') zusammen. Bevorzugt beträgt die Menge 0 bis 45 mol-%, besonders bevorzugt 0 bis 35 mol% und ganz besonders bevorzugt 0 bis 30 mol%.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hochfunktionellen hochverzweigten Polycarbonat erfolgt unter Eliminierung des monofunktionellen Alkohols oder Phenols aus dem Carbonat-Molekül.

Die nach dem erfindungsgemäßen Verfahren gebildeten hochfunktionellen hochverzweigten Polycarbonate sind nach der Reaktion, also ohne weitere Modifikation, mit Hydroxylgruppen und/oder mit Carbonatgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end oder seitenständige funktionelle Gruppen auf.

Bei der Herstellung der hochfunktionellen Polycarbonate B1) ist es notwendig, das Verhältnis von den OH-Gruppen enthaltenden Verbindungen zu Phosgen oder Carbonat so einzustellen, dass das resultierende einfachste Kondensationsprodukt (im weiteren Kondensationsprodukt (K) genannt) im Mittel entweder eine Carbonatgruppe oder Carbamoylgruppe und mehr als eine OH-Gruppe oder eine OH-Gruppe und mehr als eine Carbonatgruppe oder Carbamoylgruppe enthält. Die einfachste Struktur des Kondensationsproduktes (K) aus einem Carbonat (A) und einem Di- oder Polyalkohol (B) ergibt dabei die Anordnung $XY_n$ oder $Y_nX$, wobei X eine Carbonatgruppe, Y eine Hydroxyl-Gruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1:1, so resultiert im Mittel ein Molekül des Typs XY, veranschaulicht durch die allgemeine Formel 1.

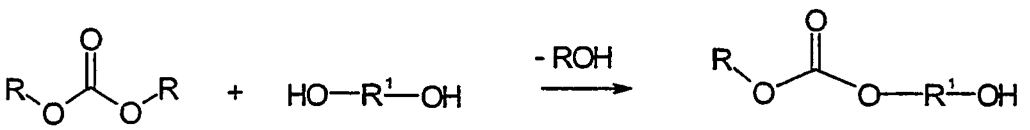


1

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs $XY_2$, veranschaulicht durch die allgemeine Formel 2. Fokale Gruppe ist hier eine Carbonatgruppe.

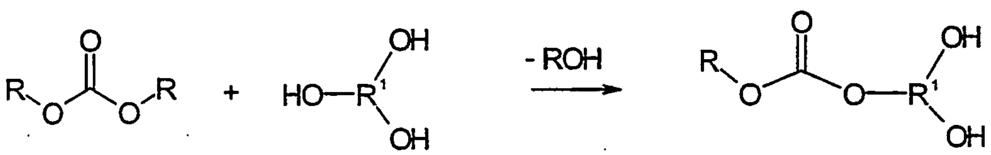


2

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs $XY_3$, veranschaulicht durch die allgemeine Formel 3. Fokale Gruppe ist hier eine Carbonatgruppe.

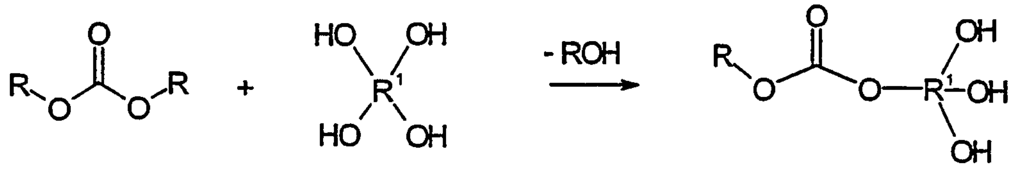


3

In den Formeln 1 bis 3 hat R die eingangs definierte Bedeutung und $R^1$steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel 4, erfolgen, wobei das Umsetzungsverhältnis bei molar 2:1 liegt. Hier resultiert im Mittel ein Molekül des Typs $X_2Y$, fokale Gruppe ist hier eine OH-Gruppe. In der Formel 4 haben R und $R^1$ die gleiche Bedeutung wie in den Formeln 1 bis 3.

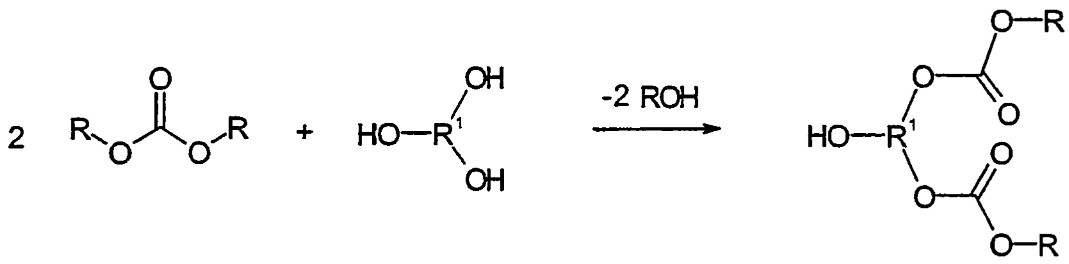


4

Werden zu den Komponenten zusätzlich difunktionelle Verbindungen, z.B. ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs $XY_2$, fokale Gruppe ist eine Carbonatgruppe.

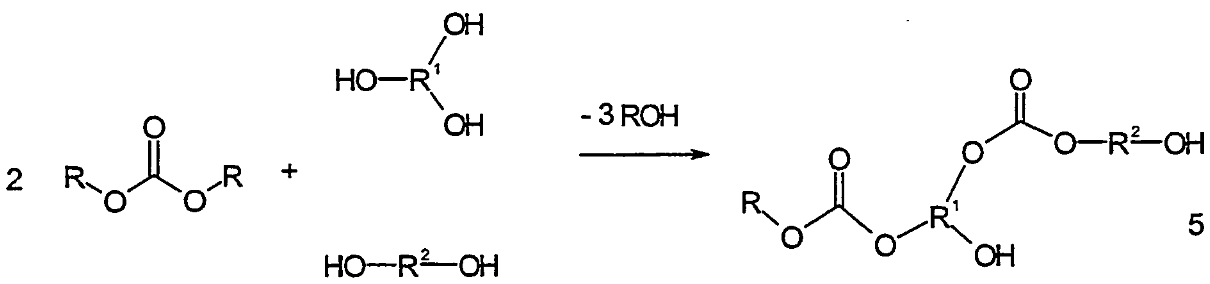


5

In Formel 5 bedeutet $R^2$ einen organischen, bevorzugt aliphatischen Rest, R und $R^1$ sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert. Setzt man die Ausgangsprodukte im Verhältnis 1:1 ein, wie in (II) dargestellt, so erhält man ein Molekül $XY_2$. Setzt man die Ausgangsprodukte im Verhältnis 2:1 ein, wie in (IV) dargestellt, so erhält man ein Molekül $X_2Y$. Bei einem Verhältnis zwischen 1:1 und 2:1 erhält man eine Mischung von Molekülen $XY_2$ und $X_2Y$.

Die beispielhaft in den Formeln 1 - 5 beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es regelmäßig empfehlenwert, solche Carbonate einzusetzen, welche bei der Umsetzung Alkohole ROH mit einem Siedepunkt von weniger als 140°C freisetzen.

Zur Beschleunigung der Reaktion können auch Katalysatoren oder Katalysatorgemische zugegeben werden. Geeignete Katalysatoren sind Verbindungen, die zum Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetrabutylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, daß aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

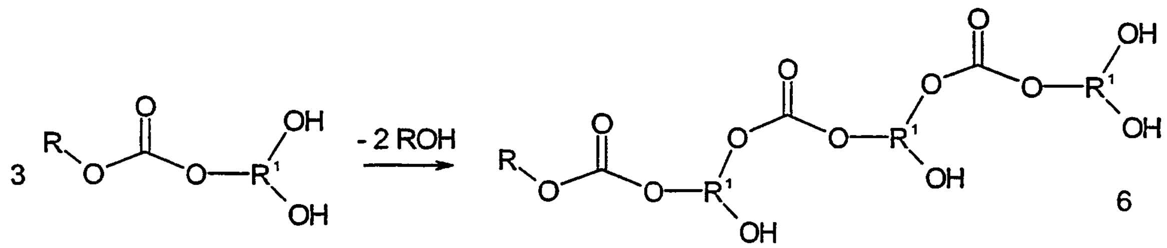


6

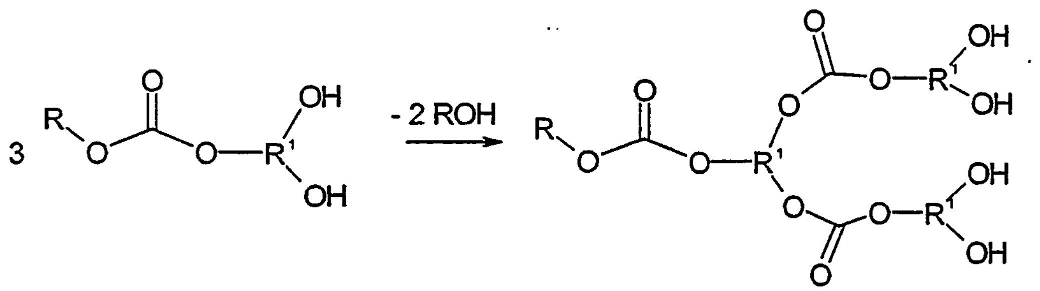


7

In Formel 6 und 7 sind R und $R^1$ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das

Produkt (K) oder das Polykondensationsprodukt (P) lagerstabil ist.

Weiterhin kann man den Katalysator deaktivieren, bei basischen z.B. durch Zugabe von Lewissäuren oder Protonensäuren.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe zum Beispiel ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

In einer weiteren bevorzugten Ausführungsform wird das Produkt gestrippt, das heißt, von niedermolekularen, flüchtigen Verbindungen befreit. Dazu kann nach Erreichen des gewünschten Umsatzgrades der Katalysator optional deaktiviert und die niedermolekularen flüchtigen Bestandteile, z.B. Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

In einer weiteren bevorzugten Ausführungsform können die erfindungsgemäßen Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionellen Elemente besitzen, so erhält man ein Polycarbonat-Polymer mit statistisch verteilten von den Carbonat-oder Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylgruppen weitere funktionelle Gruppen oder funktionelle Elemente, wie Mercaptogruppen, primäre, sekundäre oder tertiäre Aminogruppen, Ethergruppen, Derivate von Carbonsäuren, Derivate von Sulfonsäuren, Derivate von Phosphonsäuren, Silangruppen, Siloxangruppen, Arylreste oder langkettige Alkylreste tragen. Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxy-piperidin, 1-Hydroxyethylpiperazin, Diethanolamin, Dipropanolamin, Diisopropanol-amin, Tris(hydroxymethyl)aminomethan, Tris(hydroxyethyl)aminomethan, Ethylen-diamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen oder Harnstoffgruppen aufweisende Polycarbonate.

Durch Zugabe von Dicarbonsäuren, Tricarbonsäuren, z.B. Terephthalsäuredimethylester oder Tricarbonsäureester lassen sich Estergruppen erzeugen.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat-Gruppen oder Carbamoylgruppen des Polycarbonates reagieren kann, umsetzt.

Hydroxylgruppen enthaltende hochfunktionelle, hoch oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Ein großer Vorteil des Verfahren liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Als Komponente B2) können die erfindungsgemäß erhältlichen Formmassen mindestens 0,01 bis 50, vorzugsweise 0,5 bis 20 und insbesondere 0,7 bis 10 Gew.-% mindestens eines hyperverzweigten Polyesters des Typs $A_xBy$ enthalten, wobei

x mindestens 1,1 vorzugsweise mindestens 1,3, insbesondere mindestens 2

y mindestens 2,1, vorzugsweise mindestens 2,5, insbesondere mindestens 3

beträgt.

Selbstverständlich können als Einheiten A bzw. B auch Mischungen eingesetzt werden.

Unter einem Polyester des Typs $A_xB_y$ versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hyperverzweigten Polyestern B2) werden im Rahmen dieser Erfindung unvernetzte Makromoleküle mit Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Die Komponente B2) weist vorzugsweise ein $M_n$ von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weist B2) eine OH-Zahl von 0 bis 600, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die $T_g$ beträgt vorzugsweise von -50°C bis 140°C und insbesondere von -50 bis 100°C (mittels DSC, nach DIN 53765).

Insbesondere solche Komponenten B2) sind bevorzugt, in denen mindestens eine OH- bzw. COOH-Zahl größer 0, vorzugsweise größer 0,1 und insbesondere größer 0,5 ist.

Insbesondere durch die nachfolgend beschriebenen Verfahren ist die erfindungsgemäße Komponente B2) erhältlich, u.z. indem man

(a) eine oder mehrere Dicarbonsäuren oder eines oder mehrere Derivate derselben mit einem oder mehreren mindestens trifunktionellen Alkoholen

oder

(b) eine oder mehrere Tricarbonsäuren oder höhere Polycarbonsäuren oder eines oder mehrere Derivate derselben mit einem oder mehreren Diolen

in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist die bevorzugte Herstellmethode.

Hochfunktionelle hyperverzweigte Polyester B2) im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-a,w-dicarbonsäure, Dodecan-a,w-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure,
wobei die oben genannten Dicarbonsäuren substituiert sein können mit einem oder mehreren Resten, ausgewählt aus $C_1$-$C_{10}$-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbemsteinsäure, 2-Ethylbemsteinsäure, 2-Phenylbemsteinsäure, Itaconsäure, 3,3-Dimethylglutarsäure.

Weiterhin gehören zu den nach Variante (a) umsetzbaren Dicarbonsäuren ethylenisch ungesättigte Säuren wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form von Derivaten einsetzen.

Unter Derivaten werden bevorzugt verstanden

- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.

Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden

- die betreffenden Anhydride in monomerer oder auch polymerer Form,
- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner Mono-, Di- oder Trivinylester
- sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um Komponente B zu erhalten.

Als Diole für Variante (b) der vorliegenden Erfindung verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 22,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H oder Gemische von zwei oder mehr Vertretern der voranstehenden Verbindungen, wobei n eine ganze Zahl ist und n = 4 bis 25 beträgt. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Die Molverhältnis der Moleküle A zu Molekülen B im $A_xB_y$-Polyester bei den Varianten (a) und (b) beträgt 4:1 bis 1:4, insbesondere 2:1 bis 1:2.

Die nach Variante (a) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um ein Triol handeln, welches primäre und sekundäre Hydroxylgruppen aufweist, bevorzugtes Beispiel ist Glycerin.

Bei der Durchführung der erfindungsgemäßen Umsetzung nach Variante (a) arbeitet man bevorzugt in Abwesenheit von Diolen und monofunktionellen Alkoholen.

Bei der Durchführung der erfindungsgemäßen Umsetzung nach Variante (b) arbeitet man bevorzugt in Abwesenheit von Mono- oder Dicarbonsäuren.

Das erfindungsgemäße Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauem führt.

Zur Durchführung des erfindungsgemäß bevorzugten Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, $MgSO_4$ und $Na_2SO_4$. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Alumiumverbindungen der allgemeinen Formel $Al(OR)_3$ und Titanate der allgemeinen Formel $Ti(OR)_4$ als saure anorganische Katalysatoren einsetzbar, wobei die Reste R jeweils gleich oder verschieden sein können und unabhängig voneinander gewählt sind aus

$C_1$-$C_{10}$-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

$C_3$-$C_{12}$-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in $Al(OR)_3$ bzw. $Ti(OR)_4$ jeweils gleich und gewählt aus Isopropyl oder 2-Ethylhexyl.

Bevorzugte saure metallorganische Katalysatoren sind beispielsweise gewählt aus Dialkylzinnoxiden $R_2SnO$, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Das Verfahren wird vorzugsweise unter Inertgasatmosphäre durchgeführt, das heißt beispielsweise unter Kohlendioxid, Stickstoff oder Edelgas, unter denen insbesondere Argon zu nennen ist.

Das Verfahren wird vorzugsweise bei Temperaturen von 60 bis 200°C durchgeführt. Vorzugsweise arbeitet man bei Temperaturen von 130 bis 180, insbesondere bis 150°C oder darunter. Besonders bevorzugt sind maximale Temperaturen bis 145°C, ganz besonders bevorzugt bis 135°C.

Die Druckbedingungen des Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die hochfunktionellen hyperverzweigten Polyester B2) leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Weiterhin kann die Komponente B2) in Gegenwart von Enzymen oder Zersetzungsprodukten von Enzymen hergestellt werden (gemäß DE-A 101 63163). Es gehören die erfindungsgemäß umgesetzten Dicarbonsäuren nicht zu den sauren organischen Katalysatoren im Sinne der vorliegenden Erfindung.

Bevorzugt ist die Verwendung von Lipasen oder Esterasen. Gut geeignete Lipasen und Esterasen sind Candida cylindracea, Candida lipolytica, Candida rugosa, Candida antarctica, Candida utilis, Chromobacterium viscosum, Geolrichum viscosum, Geotrichum candidum, Mucor javanicus, Mucor mihei, pig pancreas, pseudomonas spp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. Immobilisierte Enzyme sind kommerziell erhältlich, beispielsweise bei Novozymes Biotech Inc., Dänemark.

Die Menge an immobilisiertem eingesetztem Enzym beträgt 0,1 bis 20 Gew.-%, insbesondere 10 bis 15 Gew.-%, bezogen auf die Masse der insgesamt eingesetzten umzusetzenden Ausgangsmaterialien.

Das Verfahren wird bei Temperaturen über 60°C durchgeführt. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Das Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 5 Gew.-Teile, bezogen auf die Masse der eingesetzten umzusetzenden Ausgangsmaterialien, bevorzugt mindestens 50 Gew.-Teile und besonders bevorzugt mindestens 100 Gew.-Teile. Mengen von über 10 000 Gew.-Teile Lösemittel sind nicht erwünscht, weil bei deutlich niedrigeren

Konzentrationen die Reaktionsgeschwindigkeit deutlich nachlässt, was zu unwirtschaftlichen langen Umsetzungsdauern führt.

Das Verfahren wird bei Drücken oberhalb von 500 mbar durchgeführt. Bevorzugt ist die Umsetzung bei Atmosphärendruck oder leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des Verfahrens beträgt üblicherweise 4 Stunden bis 6 Tage, bevorzugt 5 Stunden bis 5 Tage und besonders bevorzugt 8 Stunden bis 4 Tage.

Nach beendeter Reaktion lassen sich die hochfunktionellen hyperverzweigten Polyester B2 isolieren, beispielsweise durch Abfiltrieren des Enzyms und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Die hochfunktionellen, hyperverzweigten Polyester B2) zeichnen sich durch besonders geringe Anteile an Verhärbungen und Verharzungen aus. Zur Definition von hyperverzweigten Polymeren siehe auch: P.J. Flory, J. Am. Chem. Soc. 1952, 74,2718 und A. Sunder et al., Chem. Eur. J. 2000, 6, No.1, 1-8. Unter "hochfunktionell hyperverzweigt" wird im Zusammenhang mit der vorliegenden Erfindung jedoch verstanden, dass der Verzweigungsgrad (Degree of branching), das heißt die mittlere Anzahl von dendritischen Verknüpfungen plus die mittlere Anzahl von Endgruppen pro Molekül 10 - 99,9 %, bevorzugt 20 - 99 %, besonders bevorzugt 30 - 90 % beträgt (siehe dazu H. Frey et al. Acta Polym. 1997, 48, 30).

Die erfindungsgemäßen Polyester B2) haben ein Molekulargewicht $M_w$ von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester B2) sind carboxyterminiert, carboxy- und Hydroxylgruppen-terminiert und vorzugsweise Hydroxylgruppen-terminiert.

Die Verhältnisse der Komponenten B1) zu B2) betragen vorzugsweise von 1:20 bis 20:1, insbesondere von 1: 15 bis 15:1 und ganz besonders bevorzugt von 1:5 bis 5:1, wenn B1 mit B2 in Mischung eingesetzt wird.

Bei den eingesetzten hyperverzweigten Polycarbonaten B1/Polyestem B2 handelt es sich um Partikel mit einer Größe von 20 - 500 nm. Diese Nanopartikel liegen im Polymerblend fein verteilt vor, die Größe der Partikel im Compound beträgt von 20 bis 500 nm, vorzugsweise 50 - 300 nm.

Derartige Compounds sind im Handel als Ultradur® high speed erhältlich.

Geeignete Schmiermittel C) sind niedermolekulare Polyethylenwachse, welche vorzugsweise funktionelle Gruppen, wie Glycidyl- und/oder Carboxylgruppe enthalten können, mit einem mittleren Molekulargewicht Mn (Zahlenmittel) von 500 bis 20 000, vorzugsweise 1 000 bis 10 000, insbesondere 1 000 bis 5 000 und ganz besonders 1 000 bis 3 000 g/mol.

Das Molekulargewicht wird üblicherweise durch Gelpermeationschromatografie (GPC) mit LDPE-Standard bestimmt. Die Schmelzviskosität beträgt vorzugsweise von 10 bis 10 000, vorzugsweise 100 bis 5 000, insbesondere 100 bis 3 000 und ganz besonders 100 bis 2 000 mm2/g (gemäß DIN 51 562) bei einer Temperatur von 120°C.

Bei den säure- oder epoxygruppenhaltigen Polyethylenen kann es sich um Copolymere von Ethylen mit $\alpha,\beta$-ungesättigten Säure- oder Epoxyverbindungen handeln oder auch um Polyethylene auf die Säure- oder Epoxyverbindungen aufgepfropft werden.

Die Polyethylene können nach dem Hoch-, Mittel- oder Niederdruckverfahren hergestellt werden. Es können sowohl Polyethylene hoher Dichte (HDPE) (Bereich von 0,94 bis 0,97 g/cm3), bevorzugt hergestellt nach dem sog. Phillips-Verfahren (Mitteldruckverfahren), als auch Polyethylene niedriger Dichte (LDPE) (Bereich von 0,91 bis 0,94 g/cm3), insbesondere lineare Polyethylene niedriger Dichte, bevorzugt hergestellt nach dem Gasphasenverfahren, eingesetzt werden.

Verfahren zur Herstellung derartiger Copolymere sind dem Fachmann bekannt (z.B. Ullmanns Enzyklopädie der Technischen Chemie, 4. Aufl., Bd. 19, S. 169-175).

Geeignete Produkte sind im Handel unter dem Warenzeichen Luwax® (BASF AG), Hoechst-Wachs® PED 191 oder H12 (Hoechst AG) sowie Poligen® EAS-1 (BASF AG) erhältlich.

Weitere Schmiermittel sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein, wobei nicht alle OH-Gruppen verestert sein müssen.

Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Durch Transmissionselektronenmikroskopie wurde die Morphologie ausgewählter Compounds untersucht. Es zeigt sich eine gute Dispergierung der Partikel im Blend. Es wurden Partikelgrößen von 20 - 500 nm beobachtet.

Die gemäß dem vorstehend beschriebenen Verfahren erhältlichen Polyester zeigen verbesserte mechanische Eigenschaften, insbesondere multiaxiale Zähigkeit, eine geringere Vergilbungsneigung und lassen sich besser verarbeiten, da die Kristallisationsneigung wesentlich verbessert ist. Insbesondere die Fließfähigkeit ist stark verbessert unter weitest gehendem Erhalt der mechanischen Eigenschaften.

Für weitere Anwendungen können die erfindungsgemäßen Polyester mit weiteren Zusatzstoffen abgemischt werden, vorzugsweise für E/E-Anwendungen, Lichtwellenleiter, usw..

Beispiele

Herstellvorschrift für die Polycarbonate B1

Allgemeine Arbeitsvorschrift:

In einem Dreihalskolben, ausgestattet mit Rührer, Rückflusskühler und Innenthermometer wurde gemäß Tabelle 1 der mehrfunktionelle Alkohol äquimolar mit Diethylcarbonat gemischt und 250 ppm Katalysator (bezogen auf die Menge an Alkohol) zugegeben. Die Mischung wurde anschließend unter Rühren auf 100°C, bei dem mit * gekennzeichneten Versuch auf 140°C erwärmt, und 2 h bei dieser Temperatur gerührt.

Mit fortschreitender Reaktionsdauer reduzierte sich dabei die Temperatur des Reaktionsgemisches bedingt durch die einsetzende Siedekühlung des freigesetzten Monoalkohols. Nun wurde der Rückflusskühler gegen einen absteigenden Kühler getauscht, Ethanol abdestilliert und die Temperatur des Reaktionsgemisches langsam bis auf 160°C erhöht.

Das abdestillierte Ethanol wurde in einem gekühlten Rundkolben gesammelt, ausgewogen und der Umsatz so gegenüber dem theoretisch möglichen Vollumsatz prozentual ermittelt (siehe Tabelle 1).

Die Reaktionsprodukte wurden anschließend per Gelpermeationschromatographie analysiert, Laufmittel war Dimethylacetamid, als Standard wurde Polymethylmethacrylat (PMMA) verwendet.

Tabelle 1

| Alkohol | Katalysator | Destillat Ethanolmenge bez. auf Vollumsatz [mol.-%] | Molekulargewicht $M_w$ $M_n$ | Visk. 23° [mPas] | OH-Zahl [mgKOH/g] |
|---|---|---|---|---|---|
| TMP x 1,2 PO | $K_2CO_3$ | 90 | 5907<br>2164 | 1810 | 300 |
| TMP ≙ Trimethylolpropan<br>PO ≙ Propylenoxid | | | | | |

Komponente B2

Tabelle 2

| | Monomere | Mn (g/mol) | Mw (g/mol) | OH-Zahl (mg KOH/g) | Säure-Zahl (mg KOH/g) |
|---|---|---|---|---|---|
| B 2 | Terephthalsäure und Glycerin | 900 | 2390 | 416 | 0 |

Herstellung B2

1589 g (8.19 mol) Terephtalsäuredimethylester und 628 g (6.83 mol) Glycerin wurden in einem 5-1-Glaskolben vorgelegt, der mit Rührer, Innenthermometer, Gaseinleitungsrohr, Rückflusskühler und Vakuumanschluss mit Kühlfalle ausgerüstet war. Man gab 4.4 g Di-n-Butyizinnoxid zu, kommerziell erhältlich als Fascat® 4201, und erhitzte mit Hilfe eines Ölbads auf eine Innentemperatur von 140°C. Man legte einen verminderten Druck von 50 mbar an, um bei der Reaktion gebildetes Wasser abzutrennen. Die Reaktionsmischung wurde 34 Stunden bei der genannten Temperatur und den genannten Druck gehalten. Anschließend wurde auf Zimmertemperatur abgekühlt, man erhielt 1750 g hyperverzweigten Polyester als klare, sehr viskose Flüssigkeit. Die analytischen Daten sind in obiger Tabelle 2 zusammengefasst.

Beispiel 1

In einer kontinuierlichen Weise wurden 881,8 g DMT und 563,7 g 1,4-Butandiol in eine Reaktionszone eingespeist. In das Butandiol wurde dabei kontinuierlich vor Kontaktieren des DMT mit 781,8 mg Tetrabutylorthotitanat und 99 Mikroliter einer 30 Gew.-% Lösung von NaOCH3 in Methanol eingemischt.

Die Temperatur in der ersten Reaktionszone betrug 185°C bei einem Druck von 1 bar und einer mittleren Verweilzeit von 182 min.

Die Temperatur in der zweiten Reaktionszone betrug 205°C bei einem Druck von 1 bar und einer mittleren Verweilzeit von 63 min.

Für weitere Produktzusammensetzungen können derartige Polyesterformmassen noch mit weiteren Additiven, Füllstoffen etc. anschließend abgemischt werden.

Die Temperatur in der dritten Reaktionszone betrug 210°C bei einem Druck von 1 bar und einer mittleren Verweilzeit von 40 min.

Die hierbei anfallenden Destillate, welche BDO, DMT, THF und Wasser enthielten, wurden in einem Kolonnensystem getrennt, wobei DMT und BDO in die Reaktion zurückgeführt wurden. Mit einem Umsatz von 93 % wurde das Umesterungsprodukt einem senkrecht stehenden Rohr zugeführt, das in vier Heizzonen unterteilt war.

Die Temperatur in der vierten Reaktionszone betrug 247°C bei einem Druck von 700 mbar und einer mittleren Verweilzeit von 22 min.

Die Temperatur in der fünften Reaktionszone betrug 252°C bei einem Druck von 400 mbar und einer mittleren Verweilzeit von 11 min.

Die Temperatur in der sechsten Reaktionszone betrug 255°C bei einem Druck von 150 mbar und einer mittleren Verweilzeit von 5 min.

Die Temperatur in der siebten Reaktionszone betrug 256°C bei einem Druck von 30 mbar und einer mittleren Verweilzeit von 18 min.

Das überschüssige BDO und die Reaktionsprodukte wie THF und Wasser wurden am oberen Ende des Reaktionsrohres abgetrennt. Das Vorkondensat wurde ohne weitere Zugabe von Katalysatoren in einen Polykondensationsreaktor (Zone 8) überführt.

Die Temperatur in der achten Reaktionszone betrug 257°C bei einem Druck von 0,4 mbar, einer mittleren Verweilzeit von 115 min und einer Oberflächenemeuerung von 4 $m^2$/h*kg PBT.

Nach Austritt aus der achten Reaktionszone wurde der 257°C heißen Schmelze (100 % der Endviskositätszahl) Komponente B2 flüssig zudosiert (T der Zuleitung = 80°C) in Mengen von 1 Gew.-%, bezogen auf A) und B).

Beispiel 2

Es wurde analog Beispiel 1 gearbeitet, wobei jedoch 2 Gew.-% B2, bezogen auf 100 Gew.-% A) und B) zudosiert wurde.

Vergleichsbeispiele A und B

Die Komponenten A) und B2) oder B1) wurden auf übliche Weise konfektioniert, wobei als Komponente A) Polybutylenterephthalat mit einer Viskositätszahl VZ von 130 ml/g und einem Carboxylendgruppengehalt von 34 mval/kg (Ultradur ® B4500 der BASF AG) VZ gemessen in 0,5 gew.-%iger Lösung aus Phenol/o-Dichlorbenzol, 1:1-Mischung bei 25°C eingesetzt wurde.

Beispiel 3

Es wurde analog Beispiel 1 gearbeitet, wobei jedoch 0,75 Gew.-% B1 bei Raumtemperatur (RT), bezogen auf

100 Gew.-% A) und B) eingesetzt wurde.

Beispiel 4

Es wurde analog Beispiel 1 gearbeitet, wobei jedoch 1 Gew.% B1 bei RT, bezogen auf 100 Gew.-% A) und B) eingesetzt wurde.

Verarbeitung zu Formteilen

Die aus den Beispielen sowie den Vergleichsbeispielen A und B erhaltenen Produkte wurden im Spritzguss zu den für die Zähigkeitsprüfungen benötigten Formkörpern verarbeitet. Die Massetemperatur betrug 260°C, die Werkzeugtemperatur 80°C.

Es wurden folgende Messungen durchgeführt:

Die Viskositätszahl wurde bei 25°C an einer 0,5 % Lösung des Polymeren in einem 1:1-Gemisch aus Phenol/o-Dichlorbenzol gemessen (DIN 53728).

Der Zugversuch wurde gemäß ISO 527-2 durchgeführt (mit max. Spannung und Bruchdehnung), die Charpy-Schlagzähigkeit gemäß ISO 179-1 eU.

Die Ergebnisse der Messungen sind der Tabelle 3 zu entnehmen.

Tabelle 3

| | Bsp. 1 | Bsp. 2 | Vgl. A | Bsp. 3 | Bsp. 4 | Vgl. B |
|---|---|---|---|---|---|---|
| VZ [g/l] | 127 | 118 | 115 | 118 | 112 | 109 |
| MVR (275°C; 2,16 kg) | 67 | 98 | 85 | 94 | 115 | 99 |
| E-Modul [mpa] | 2594 | 2543 | 2469 | 2604 | 2536 | 2581 |
| Spannung bei Max. [N/mm] | 72 | 64 | 58 | 61 | 57 | 58 |
| Charpy gekerbt [kJ/m$^2$] | 4,9 | 3,4 | 1,6 | 5,3 | 4,7 | 4,1 |
| Bruchdehnung [%] | 48,6 | 36,5 | 19,7 | 33,7 | 42,3 | 19,7 |
| Fließspirale 260°C/80°C 2 mm | 46 | 51 | 49 | 49 | 55 | 48 |

## Patentansprüche

1. Kontinuierliches Verfahren zur Herstellung von hoch- oder hyperverzweigten Polymeren B) und gegebenenfalls Schmiermittel C) enthaltenden Polyalkylenarylaten A), in dem man eine aromatische Dicarbonsäure oder deren Ester bzw. esterbildende Derivate mit einem molaren Überschuss einer aliphatischen Dihydroxyverbindung verestert bzw. umestert und das erhaltene Umesterungs- bzw. Veresterungsprodukt polykondensiert, **dadurch gekennzeichnet, dass** man bei Erreichen von mindestens 80 % der gewünschten Viskositätszahl Komponente B) sowie gegebenenfalls C) der Polymerschmelze A) zugibt und die Schmelze gegebenenfalls nachkondensiert und anschließend austrägt, abkühlt und granuliert sowie als Komponente B) mindestens ein hoch- oder hyperverzweigtes Polycarbonat B1) mit einer OH-Zahl von 1 bis 600 mg KOH/g Polycarbonat (gemäß DIN 53240, Teil 2) oder mindestens einen hoch- oder hyperverzweigten Polyester B2) des Typs $A_xB_y$ mit x mindestens 1,1 und y mindestens 2,1 oder deren Mischungen einsetzt.

2. Verfahren nach Anspruch 1, **dadurch gekennzeichnet, dass** man die Komponente B) in einer Menge von 0,01 bis 50 Gew.-%, bezogen auf 100 Gew.-% der Komponenten A) bis C), zugibt.

3. Verfahren nach den Ansprüchen 1 oder 2, **dadurch gekennzeichnet, dass** man ein Polyalkylenterephthalat einsetzt.

4. Verfahren nach den Ansprüchen 1 bis 3, **dadurch gekennzeichnet, dass** man als Schmiermittel Ester oder Amide von Carbonsäuren mit 10 bis 40 C)-Atomen oder deren Mischungen einsetzt.

5. Verfahren nach den Ansprüchen 1 bis 4, **dadurch gekennzeichnet, dass** man als Schmiermittel Pentaerythrittetrastearat einsetzt.

6. Verfahren nach den Ansprüchen 1 bis 5, **dadurch gekennzeichnet, dass** man B) vor der Zugabe zur Schmelze gegebenenfalls bei erhöhter Temperatur im Schmiermittel C) suspendiert.

7. Verfahren nach Anspruch 6, **dadurch gekennzeichnet, dass** man die Suspension bei Temperaturen von 30 bis 150°C) herstellt und zur Polymerschmelze zugibt.

8. Verfahren nach den Ansprüchen 1 bis 7, **dadurch gekennzeichnet, dass** man als Komponente B1) einen Polycarbonat mit einem Zahlenmittel des Molekulargewichtes $M_n$ von 100 bis 15 000 g/mol einsetzt.

9. Verfahren nach den Ansprüchen 1 bis 7, **dadurch gekennzeichnet, dass** man als Komponente B1) ein Polycarbonat mit einer Glasübergangstemperatur Tg von -80°C bis 140°C einsetzt.

10. Verfahren nach den Ansprüchen 1 bis 7, **dadurch gekennzeichnet, dass** man als Komponente B1) ein Polycarbonat mit einer Viskosität (mPas) bei 23°C) gemäß DIN 53019) von 50 bis 200 000 einsetzt.

11. Verfahren nach den Ansprüchen 1 bis 10, **dadurch gekennzeichnet, dass** man als Komponente B2) einen Polyester mit einem Zahlenmittel des Molekulargewichtes $M_n$ von 300 bis 30 000 g/mol einsetzt.

12. Verfahren nach den Ansprüchen 1 bis 11, **dadurch gekennzeichnet, dass** man als Komponente B2) einen Polyester mit einer OH-Zahl (gemäß DIN 53 240) von 0 bis 600 mg KOH/g Polyester einsetzt.

13. Verfahren nach den Ansprüchen 1 bis 12, **dadurch gekennzeichnet, dass** man als Komponente B2) einen Polyester mit einer COOH-Zahl (gemäß DIN 53 240) von 0 bis 600 mg KOH/g Polyester einsetzt.

14. Verfahren nach den Ansprüchen 1 bis 13, **dadurch gekennzeichnet, dass** man als Komponente B2) einen Polyester einsetzt, wobei wenigstens eine OH-Zahl oder eine COOH-(ahl größer 0 ist.

## Claims

1. A continuous process for preparation of polyalkylene arylates A) comprising highly branched or hyperbranched polymers B) and, if appropriate, comprising lubricants C), by esterifying or transesterifying an aromatic dicarboxylic acid or its ester or ester-forming derivatives, with a molar excess of an aliphatic dihydroxy compound, and polycondensing the resultant transesterification or esterification product, which comprises, on achievement of at least 80% of the desired viscosity number, adding component B) and also, if appropriate, C) to the polymer melt A), and, if appropriate, post-condensing the melt and then discharging, cooling, and pelletizing it, and also using, as component B), at least one highly branched or hyperbranched polycarbonate B1) with an OH number of from 1 to 600 mg KOH/g of polycarbonate (to DIN 53240, Part 2), or at least one highly branched or hyperbranched polyester B2) of $A_xB_y$ type, where x is at least 1.1 and y is at least 2.1, or a mixture of these.

2. The process according to claim 1, wherein the amount of component B) added is from 0.01 to 50% by weight, based on 100% by weight of components A) to C).

3. The process according to claim 1 or 2, which uses a polyalkylene terephthalate.

4. The process according to claims 1 to 3, wherein, as lubricant, use is made of esters or amides of carboxylic acids having from 10 to 40 carbon atoms, or a mixture of these.

5. The process according to claims 1 to 4, which uses pentaerythritol tetrastearate as lubricant.

6. The process according to claims 1 to 5, wherein B) is suspended prior to addition to the melt, if appropriate at an elevated temperature, in the lubricant C).

7. The process according to claim 6, wherein the temperature at which the suspension is prepared for addition to the polymer melt is from 30 to 150°C.

8. The process according to claims 1 to 7, which uses, as component B1), a polycarbonate with a number-average molar mass $M_n$ of from 100 to 15 000 g/mol.

9. The process according to claims 1 to 7, which uses, as component B1), a polycarbonate with a glass transition temperature Tg of from -80 to 140°C.

10. The process according to claims 1 to 7, which uses, as component B1), a polycarbonate with a viscosity (mPas) at 23°C of from 50 to 200 000 to DIN 53019.

11. The process according to claims 1 to 10, which uses, as component B2), a polyester with a number-average molar mass $M_n$ of from 300 to 30 000 g/mol.

12. The process according to claims 1 to 11, which uses, as component B2), a polyester with an OH number (to DIN 53 240) of from 0 to 600 mg KOH/g of polyester.

13. The process according to claims 1 to 12, which uses, as component B2), a polyester with a COOH number (to DIN 53 240) of from 0 to 600 mg KOH/g of polyester.

14. The process according to claims 1 to 13, which uses, as component B2), a polyester, where at least one OH number or one COOH number is greater than 0.

## Revendications

1. Procédé de production en continu de polymères fortement ou hyper ramifiés B) et, éventuellement, de polyalkylène arylates A) contenant des lubrifiants C), dans lequel on estérifie ou transestérifie un acide dicarboxylique aromatique ou ses esters ou ses dérivés formant des esters avec un excédent molaire d'un composé dihydroxy aliphatique et l'on polycondense ensuite le produit d'estérification ou de transestérification ainsi obtenu, **caractérisé en ce que**, lorsqu'au moins 80 % de l'indice de viscosité souhaité est atteint, on ajoute le composant B) et éventuellement le composant C) au polymère fondu A) et la masse fondue est ensuite éventuellement condensée puis évacuée, refroidie et granulée, et **en ce que** l'on utilise comme composant B) au moins un polycarbonate fortement ou hyper ramifié B1) d'un indice OH allant de 1 à 600 mg KOH/g de polycarbonate (selon DIN 53240, partie 2), ou au moins un polyester fortement ou hyper ramifié B2) de type $A_xB_y$, x étant au moins égal à 1,1 et y étant au moins égal à 2,1 ou encore des mélanges de ceux-ci.

2. Procédé selon la revendication 1, **caractérisé en ce que** l'on ajoute le composant B) en une quantité allant de 0,01 à 50 % en poids, par rapport à 100 % en poids des composants A) à C).

3. Procédé selon les revendications 1 ou 2, **caractérisé en ce que** l'on utilise un polyalkylène téréphtalate.

4. Procédé selon les revendications 1 à 3, **caractérisé en ce que** l'on utilise comme lubrifiants des esters ou des amides d'acides carboxyliques avec 10 à 40 atomes de carbone ou des mélanges de ceux-ci.

5. Procédé selon les revendications 1 à 4, **caractérisé en ce que** l'on utilise du tétrastéarate de pentaérythritol comme lubrifiant.

6. Procédé selon les revendications 1 à 5, **caractérisé en ce que** l'on suspend B) dans le lubrifiant C) avant l'ajout à la masse fondue, éventuellement à une température accrue.

7. Procédé selon la revendication 6, **caractérisé en ce que** l'on réalise la suspension à des températures allant de 30 à 150 °C et qu'on l'ajoute au polymère fondu.

8. Procédé selon l'une des revendications 1 à 7, **caractérisé en ce que** l'on utilise comme composant B1) un polycarbonate avec une moyenne en nombre du poids moléculaire $M_n$ allant de 100 à 15 000 g/mol.

9. Procédé selon les revendications 1 à 7, **caractérisé en ce que** l'on utilise comme composant B1) un polycarbonate avec une température de transition vitreuse Tg allant de -80 °C à 140 °C.

10. Procédé selon les revendications 1 à 7, **caractérisé en ce que** l'on utilise comme composant B1) un polycarbonate d'une viscosité (mPas) à 23 °C (selon DIN 53019) allant de 50 à 200 000.

**11.** Procédé selon les revendications 1 à 10, **caractérisé en ce que** l'on utilise comme composant B2) un polyester avec une moyenne en nombre du poids moléculaire $M_n$ allant de 300 à 30 000 g/mol.

**12.** Procédé selon les revendications 1 à 11, **caractérisé en ce que** l'on utilise comme composant B2) un polyester d'un indice OH (selon DIN 53 240) allant de 0 à 600 mg KOH/g de polyester.

**13.** Procédé selon les revendications 1 à 12, **caractérisé en ce que** l'on utilise comme composant B2) un polyester d'un indice COOH (selon DIN 53 240) allant de 0 à 600 mg KOH/g de polyester.

**14.** Procédé selon les revendications 1 à 13, **caractérisé en ce que** l'on utilise comme composant B2) un polyester, au moins un indice OH ou un indice COOH étant supérieur à 0.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10200400562 A
- DE 102004005657 A
- DE 4401055 A
- US 3936421 A
- US 4329444 A
- DE 4333930 A
- DE 10138216
- DE 10147712
- DE 10163163 A


### In der Beschreibung aufgeführte Nicht-Patentliteratur


- **P.J. FLORY.** *J. Am. Chem. Soc.,* 1952, vol. 74, 2718
- **H. FREY et al.** *Chem. Eur. J.,* 2000, vol. 6 (14), 2499
- **H. FREY et al.** *Acta Polym.,* 1997, vol. 48, 30
- Ullmann's Encyclopedia of Industrial Chemistry. Electronic Release. Verlag Wiley-VCH, 2000
- Biotransformations in organic chemistry. **KURT FABER.** Immobilization. Springer Verlag, 1997, 345-356
- **A. SUNDER et al.** *Chem. Eur. J.,* 2000, vol. 6 (1), 1-8
- Ullmanns Enzyklopädie der Technischen Chemie. vol. 19, 169-175